# EUROPÄISCHE PATENTSCHRIFT

(11) **EP 3 702 690 B1**
(45) Veröffentlichungstag und Bekanntmachung des Hinweises auf die Patenterteilung: **05.04.2023**
(21) Anmeldenummer: 19160046.9
(22) Anmeldetag: 28.02.2019
(51) Int. Cl.: F24H 1/10, F24H 9/02

(54) **DURCHLAUFERHITZER MIT EINEM GEHÄUSE**
CONTINUOUS FLOW HEATER WITH A HOUSING
CHAUFFE-EAU INSTANTANÉ AVEC UN BOÎTIER

(43) Veröffentlichungstag der Anmeldung: 02.09.2020
(73) Patentinhaber: Gerdes Holding GmbH & Co. KG, 21337 Lüneburg (DE)
(72) Erfinder: Koch, Christian, 21403 Wendisch Evern (DE)
(74) Vertreter: Stork Bamberger Patentanwälte PartmbB

(56) Entgegenhaltungen:
- EP-A1- 1 655 548
- EP-A2- 0 940 640
- EP-B1- 1 655 548
- DE-U1- 29 911 720
- GB-A- 2 458 501

## Beschreibung

Die vorliegende Erfindung betrifft einen Durchlauferhitzer mit einem Gehäuse.

Bekannte elektrische Durchlauferhitzer der genannten Art weisen regelmäßig ein Gehäuse zum Befestigen der in dem Durchlauferhitzer befindlichen Komponenten, wie beispielsweise einer Kanalanordnung mit einem oder mehreren Heizkanälen, der Steuerungs- und Leistungselektronik und ggf. der Anzeige- und Bedienelemente, auf. Zudem beinhaltet das Gehäuse die hydraulischen Anschlusskomponenten zum Anschluss des Durchlauferhitzers an einen Wasserzulauf sowie einem Wasserablauf, der das mittels des Durchlauferhitzers erwärmte Wasser an die jeweiligen Zapfstellen verteilt. Ferner dient das Gehäuse zur Montage des Durchlauferhitzers, beispielsweise an Gebäudewänden, und hat zudem häufig die Funktion bestimmte Bereiche im Innenraum des Durchlauferhitzers voneinander zu trennen und/oder voneinander abzugrenzen.

Das Gehäuse derartiger Durchlauferhitzer ist dabei zum Beispiel als Kunststoffspritzteil gefertigt, das ausreichende Festigkeit und elektrische Isoliereigenschaften aufweist. Üblicherweise weist das Gehäuse des gattungsgemäßen Durchlauferhitzers mindestens ein Gehäuseunterteil sowie eine Gehäusehaube auf. In der Regel werden an den Gehäuseunterteilen sämtliche funktionalen Komponenten angeordnet, während die Gehäusehaube der elektrischen Isolation des Geräteinneren, als Schutz vor Spritz- und Strahlwasser, zur Anordnung und/oder zum Schutz von Bedien- und Anzeigeeinrichtungen dient.

Ein Durchlauferhitzer gemäß dem Oberbegriff des Anspruchs 1 ist aus der Patentschrift DE29911720U1 bekannt.

Durchlauferhitzer mit einem Gehäuse sind hinlänglich bekannt, beispielsweise geht aus dem Dokument DE 29721815 U1 ein Gehäuse für einen elektrischen Durchlauferhitzer hervor. Der Gegenstand weist einen besonders angeformten Bestandteil der Abdeckhaube und des Grundträgers auf, wodurch das Gehäuse ohne zusätzliche Befestigungshilfsmittel auskommt.

Zudem geht aus der EP 2 641 030 B1 ein Gehäuse für einen elektrischen Durchlauferhitzer mit einem Montagerahmen zur Aufnahme zumindest eines Heizblocks und einer geräteinternen Verrohrung zur Zuführung von Kaltwasser zum Heizblock und zur Entnahme von Warmwasser aus dem Heizblock hervor.

Nachteilig ist, dass keine der bekannten Geräte es ermöglichen, hydraulische Anschlussleitungen auf einfache Art und Weise an dem Gehäuseunterteil wieder lösbar anzuordnen. Während der Lebensdauer eines Durchlauferhitzers ist es regelmäßig notwendig, einzelne Komponenten auszutauschen, zu warten oder zu erneuern. Bei den bekannten Durchlauferhitzern ist ein Lösen der hydraulischen Anschlüsse von dem Gehäuse bzw. dem Gehäuseunterteil in der Regel nur durch einen aufwendigen Einsatz von Werkzeugen möglich oder ein Lösen ist zerstörungsfrei überhaupt nicht möglich.

Ferner ist es ein Bestreben von Herstellern und Politik, recyclefähige Produkte zu etablieren, die mit äußerst geringem Aufwand in möglichst homogene Gruppen von Einzelteilen zerlegt werden können. Durchlauferhitzer umfassen verschiedenste Bauteile, die aus einer Vielzahl von Materialien bestehen. Es liegt insbesondere ein Mix von Metallen, Halbleiterkomponenten sowie Kunststoffen vor. Daher ist es insbesondere bei Durchlauferhitzern für die Demontage erforderlich, dass die Komponenten zerstörungsfrei demontiert werden können, damit die jeweiligen Einzelteile verwertet und anschließend dem Recycling zugeführt werden können.

Es ist daher Aufgabe der vorliegenden Erfindung, einen Durchlauferhitzer mit einem Gehäuse vorzuschlagen, der eine werkzeuglose, wieder lösbare Anordnung von Leitungen ermöglicht. Zudem ist es Aufgabe der Erfindung, den Montage- sowie Demontageaufwand beim Anordnen bzw. Wiederlösen der Leitungen zu minimieren.

Die Aufgabe wird durch den eingangs genannten Durchlauferhitzer dadurch gelöst, dass dieser eine Gehäusehaube und ein Gehäuseunterteil umfasst, wobei das Gehäuseunterteil mindestens eine zur Trennung eines Anschlussraumes von einem Geräteinnenraum eingerichtete Gehäusewand aufweist, wobei die Gehäusewand mindestens eine zu der Gehäusehaube hin offene Wandausnehmung aufweist, die zum Durchführen mindestens einer Leitung eingerichtet ist; mindestens ein Leitungsarretierungselement, das zum lösbaren Anordnen in der Wandausnehmung unter Arretierung der mindestens einen Leitung ausgebildet ist; weiter umfassend mindestens ein Verriegelungsmittel, das eingerichtet ist, das Leitungsarretierungselement in einer Arretierungsposition an der Gehäusewand selbsttätig zu verriegeln.

Der erfindungsgemäße Durchlauferhitzer weist den Vorteil auf, dass die Leitung bzw. die Leitungen, seien es hydraulische Anschlussleitungen und/oder elektrische Leitungen auf besonderes einfache Weise werkzeugfrei montierbar sind. Zudem können diese auf ebenso einfache Weise leicht demontiert werden. Dabei ist stets eine zuverlässige Anordnung der durch die Gehäusewand geführten Leitungen gewährleistet.

Durch das lösbare Anordnen der Leitung in der Wandausnehmung der Gehäusewand ist ein Entfernen des die Leitung haltenden Leitungsarretierungselements problemlos möglich, wodurch auch die darin befindlichen Leitungen aus dem Gehäuse über die Wandausnehmung der Gehäusewand wieder zuverlässig und einfach demontiert werden können. Bei Bedarf ist es wiederum möglich die zuvor demontierten Leitungen erneut in die Wandausnehmung der Gehäusewand einzusetzen und mit dem Leitungsarretierungsmittel erneut zu arretieren. Auf diese Weise können bei einer Wartung dieselben Bauteile erneut verwendet werden; alternativ ist bei einer Zuführung des Durchlauferhitzers in den Recyclingkreislauf ein Trennen der einzelnen Komponenten möglich.

Ferner wird mittels des Verriegelungsmittels das Leitungsarretierungselement an der Gehäusewand selbsttätig verriegelt, wodurch auf den Einsatz von Hilfsmitteln, wie beispielsweise Schraubendreher, Klemmen oder dergleichen, zum Befestigen oder zur Montage/Demontage verzichtet werden kann. Anders ausgedrückt ist das Verriegelungsmittel als Selbsthalteelement ausgebildet. Ist die entsprechende Position des Leitungsarretierungselements in der zur Gehäusehaube hin offenen Wandausnehmung erreicht, verriegelt das Leitungsarretierungselement das Verriegelungsmittel selbsttätig an der Gehäusewand und ist so gegen zuverlässig an dieser arretiert. Auf diese Weise wird die Leitung bzw. die Leitungen zuverlässig in der beschriebenen Anordnungsposition gehalten.

Vorzugsweise ist die Wandausnehmung zumindest im Wesentlichen U- oder V-förmig ausgebildet. Auch andere Geometrien der Wandausnehmung sind möglich, beispielsweise L- oder T-förmig. Insbesondere ist das Leitungsarretierungselement jeweils zumindest im Wesentlichen als zur Geometrie der Wandausnehmung korrespondierendes Passstück ausgebildet, wobei jeweils eine entsprechende Ausnehmung für die Leitung/Leitungen entsprechend dem erforderlichen Durchmesser die Geometrie der Wandausnehmung zusätzlich bestimmt.

Eine zweckmäßige Ausgestaltung der Erfindung ist dadurch gekennzeichnet, dass das mindestens eine Verriegelungsmittel mindestens ein betätigbares Federelement sowie mindestens eine Federelementaufnahme zur Arretierung des Federelements aufweist. Dies bietet den Vorteil, dass das Federelement in der Federelementaufnahme anordenbar ist, wodurch eine Verriegelung mittels des Federelements erfolgen kann, und so eine Arretierung der Leitung in der Wandausnehmung bewirkt wird. "Ein betätigbares Federelement" im Sinne der Erfindung bedeutet, dass das Federelement beweglich angeordnet ist. Das Federelement kann vorzugsweise einhändig gegen sich aufbauende Federkraft in seiner Position bewegt werden, wobei es wieder selbsttätig in die Ausgangsposition mittels Federkraft zurückgeht. Somit kann das Federelement beispielsweise mit der Federelementaufnahme in Kontakt gebracht werden, das heißt in die Aufnahme eingeführt werden.

Gemäß einer weiteren bevorzugten Ausführungsform der Erfindung umfasst jedes Verriegelungsmittel jeweils zwei Federelemente sowie zwei Federelementaufnahmen. Auf diese Weise ist eine hoch zuverlässige Fixierung des Leitungsarretierungselements gegeben, da das Verriegelungsmittel zur beidseitigen lösbaren Fixierung ausgebildet und eingerichtet ist. Vorzugsweise ist die Arretierung bereits mit nur einem Verriegelungsmittel gewährleistet. Das Vorhandensein von jeweils zwei Elementen bietet die Möglichkeit, dass bei einem Defekt eines der Verriegelungsmittel immer noch eine zuverlässige Arretierung der Leitung gegeben ist.

Eine bevorzugte Weiterbildung der Erfindung zeichnet sich dadurch aus, dass das Federelement an dem Leitungsarretierungselement ausgebildet ist und dass die Federelementaufnahme an der Gehäusewand ausgebildet ist. Die Ausbildung des Federelements an dem Leitungsarretierungselement bzw. der Federelementaufnahme an der Gehäusewand bietet den Vorteil, dass durch eine möglichst einfache konstruktive Ausbildung ein zuverlässiges Verriegelungsmittel bestehend aus nur zwei Komponenten zur Verfügung gestellt wird. Das Federelement fungiert dabei als Riegel und die Federelementaufnahme dient der Aufnahme des Riegels.

Gemäß einer weiteren bevorzugten Ausbildung der Erfindung sind das Federelement und die Federelementaufnahme als eine formschlüssige Schnappverbindung ausgebildet und eingerichtet. Mittels der Schnappverbindung ist ein einfaches, werkzeugfreies Montieren und Wiederlösen möglich. Die genannte Schnappverbindung ist, insbesondere als Spritzguss-Kunststoffteil, kostengünstig herstellbar, so dass deren Einsatz großes Einsparpotential sowohl hinsichtlich der Herstellungskosten als auch bezüglich der Montage- und Demontagekosten bietet. In einer alternativen Ausführungsform ist die Schnappverbindung als eine Biegeschnapparmverbindung, Schnapphakenverbindung oder eine Torsionsschnappverbindung ausgebildet und eingerichtet.

Eine weitere zweckmäßige Ausbildung der Erfindung ist dadurch gekennzeichnet, dass das Leitungsarretierungselement mindestens ein Begrenzungselement zum Begrenzen des Betätigungsweges des Federelements umfasst. Durch das Begrenzungselement wird auf einfache Art und Weise eine Möglichkeit bereitgestellt, den Betätigungsweg des Federelements zu begrenzen und auf dieser Weise einer unzulässigen Überdehnung des Materials entgegenzuwirken, um eine andernfalls mögliche Materialermüdung oder sogar einen Materialbruch wirksam zu verhindern.

Auf diese Weise wird der Betätigungsweg derart beschränkt, dass entsprechend den Material- und Konstruktionseigenschaften ein dauerhafter Einsatz des Federelements gewährleistet wird. Das Begrenzungselement begrenzt nämlich den maximalen Betätigungsweg der Federelemente beim Lösen des Leitungsarretierungselements aus der Wandausnehmung. Bei dem erfindungsgemäßen Durchlauferhitzer können somit die Federelemente nur maximal bis zu dem Begrenzungselement betätigt werden und werden danach in der weiteren Bewegung, die - wie zuvor beschrieben - schädliche Auswirkungen auf das Federelement haben kann, gehindert.

Gemäß einer weiteren bevorzugten Ausführungsform ist das Leitungsarretierungselement in der Wandausnehmung der Gehäusewand mittels einer Feder-Nut-Anordnung in Richtung der Gehäusehaube und entgegen dieser bewegbar eingerichtet, wobei die Gehäusewand bzw. das Leitungsarretierungselement jeweils eine Nut- oder Federumrandung aufweist. Auf diese Weise lässt sich das Leitungsarretierungselement auf sichere und einfache Art in der Wandausnehmung führen und positionieren, wodurch auch sichergestellt ist, dass das Leitungsarretierungselement an gewünschter Stelle in der Gehäusewand anliegt. Ferner bietet dies den Vorteil, dass das Federelement und die Federelementaufnahme immer an der gleichen Stelle an der Gehäusewand verriegeln. Ein weiterer Vorteil der Feder-Nut-Anordnung besteht darin, dass die Stabilität der Gehäusewand erhöht wird, sobald das Leitungsarretierungselement in der Wandausnehmung eingesetzt ist.

Eine weitere zweckmäßige Ausgestaltung der Erfindung ist dadurch gekennzeichnet, dass das Leitungsarretierungselement und/oder die Wandausnehmung ein Formteil zur formschlüssigen Aufnahme der Leitung umfasst. Mit anderen Worten sind diejenigen Bereiche der Wandausnehmung sowie des Leitungsarretierungselements, die unmittelbar an der Leitung bzw. den Leitungen anliegen, derart ausgebildet, dass diese die Leitung/Leitungen formschlüssig umschließen. Anders ausgedrückt sind die Geometrien dieser Bereich auf die äußere Geometrie der Leitung/Leitungen entsprechend abgestimmt, so dass die Leitung/Leitungen bei in der Wandausnehmung angeordnetem Leitungsarretierungselement allseitig formschlüssig eingebettet sind.

Vorzugsweise weist das Formteil zusätzlich einen Materialwulst in dem genannten Bereich auf. Dieser Wulst bzw. Materialwulst stellt einen vorstehenden Materialüberschuss im Bereich der genannten Bereiche, die unmittelbar an die Leitung/Leitungen grenzen, dar und bietet so den Vorteil, dass insbesondere die Bereiche des Leitungsarretierungselements bzw. der Wandausnehmung, die eine geringe Materialstärke aufweisen, einen Materialüberschuss aufweisen, der eine sichere Arretierung der Leitung ermöglicht, wodurch beispielsweise ein Verrutschen verhindert wird. Ein weiterer Vorteil des Materialwulstes besteht darin, dass mittels diesem die Leitung/Leitungen in festem Presssitz gehalten werden. Durch den Materialwulst weisen die Formteile ein gewisses Übermaß auf. Beim Anordnen des Leitungsarretierungselements wird dieser Materialwulst elastisch oder zum Teil auch plastisch verformt.

Gemäß einer weiteren bevorzugten Ausbildung der Erfindung ist das Formteil des Leitungsarretierungselements und/oder der Wandausnehmung im Querschnitt halbkreisförmig ausgebildet. Vorzugsweise weist sowohl das Leitungsarretierungselement als auch die Wandausnehmung jeweils ein Formteil auf und die beiden Formteile sind derart aneinander angeordnet, dass sie jeweils einen kreisrunden Querschnitt aufweisen, so dass die Leitung/Leitung jeweils halbkreisförmig eingefasst sind und auf diese Weise insgesamt vollständig umschlossen wird/werden.

Eine bevorzugte Weiterbildung der Erfindung zeichnet sich dadurch aus, dass das Leitungsarretierungselement und/oder die Wandausnehmung einen komprimierbaren Materialüberschuss aufweist, insbesondere im Bereich des Formteils, der beim Arretieren der Leitung komprimiert wird. Dies bietet den Vorteil, dass die in der Ausnehmung zu arretierende Leitung vollständig und unmittelbar fixiert wird. Dadurch wird beispielsweise eine unerwünschte Beweglichkeit der Leitung vermieden, was zu Störgeräuschen führen kann. Ferner wird auf diese Weise der Geräteinnenraum des Durchlauferhitzers gegen das Eindringen von Spritz- oder Strahlwasser geschützt.

Gemäß einer weiteren bevorzugten Ausbildung der Erfindung sind die Federelemente am Formteil des Leitungsarretierungselements ausgebildet und eingerichtet. Wie oben beschrieben, ist das Leitungsarretierungselement im Bereich des Formteils mit größerer Materialstärke ausgebildet. Die beim Betätigen des Federelements auf dieses wirkenden Kräfte werden über den materialstärkeren Bereich des Formteils aufgenommen und abgeleitet. Aufgrund des in diesem Bereich vorhandenen Mehrs an Material werden die auftretenden Kräfte in einen Bereich eingeleitet, der diesen problemlos beschädigungsfrei widerstehen kann. Ein andernfalls mögliches Abreißen oder Abbrechen von Teilen oder des gesamten Federelements bei zu großer Krafteinwirkung wird so zuverlässig vermieden.

Eine weitere zweckmäßige Ausbildung der Erfindung ist dadurch gekennzeichnet, dass beim selbsttätigen Verriegeln des Leitungsarretierungselements in der Wandausnehmung ein akustischer Hinweis erfolgt. Dies bietet den Vorteil, dass beispielsweise bei der Montage des Durchlauferhitzers sichergestellt werden kann, dass das Leitungsarretierungselement zuverlässig arretiert wurde. Bei einem Ausbleiben des akustischen Hinweises bietet das eine einfache Möglichkeit, die Fehlerquelle zu detektieren. Ausgelöst wird der akustische Hinweis durch das "Einrasten" der Federelemente. Diese werden bei der Montage händisch vorgespannt und schnellen in der vorgesehenen Arretierungsposition selbsttätig in ihre Ausgangslage zurück.

Eine weitere zweckmäßige Ausgestaltung der Erfindung ist dadurch gekennzeichnet, dass das Leitungsarretierungselement mindestens eine Verbindungselementaufnahme zur Aufnahme mindestens eines Verbindungselements aufweist. In bestimmten Ausführungsformen des erfindungsgemäßen Durchlauferhitzers kann es vorteilhaft sein, dass das Leitungsarretierungselement durch zusätzliche Verbindungselemente fixiert wird. Dazu weist das Leitungsarretierungselement vorzugsweise eine Verbindungselementaufnahme auf. Mittels der Verbindungselementaufnahme kann das Leitungsarretierungselement mit zusätzlichen Verbindungselementen, beispielsweise Schrauben, an dem Gehäuse als zusätzliche mechanische Sicherung befestigt werden.

Gemäß einer weiteren bevorzugten Ausführungsform ist das Leitungsarretierungselement als eine "Blindkappe" ausgebildet. Eine "Blindkappe" im Sinne der Erfindung ist ein Leitungsarretierungselement ohne Durchbrechung für eine Leitung. Auf diese Weise können beispielsweise überschüssige Wandausnehmungen eines Durchlauferhitzers verschlossen werden, um den Geräteinnenraum gegen den Geräteanschlussraum vollständig zu trennen und beispielsweise vor unerwünschtem Schmutz- oder Wassereintrag zu schützen, um so insbesondere den Anforderungen an den Spritz- und Strahlwasserschutz zu genügen.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische perspektivische Ansicht eines Gehäuseunterteils des erfindungsgemäßen Durchlauferhitzers,
- Fig. 2: eine schematische perspektivische Ansicht eines Leitungsarretierungselements verriegelt in einer Arretierungsposition an einer Gehäusewand,
- Fig. 3: eine schematische perspektivische Ansicht des in Fig. 2 gezeigten Leitungsarretierungselements im nicht in die Gehäusewand eingesetzten Zustand,
- Fig. 4: eine schematische Seitenansicht des in den Fig. 2 und Fig. 3 gezeigten Leitungsarretierungselements verriegelt in der Arretierungsposition,
- Fig. 5: eine schematische Seitenansicht des in Fig. 2 gezeigten Leitungsarretierungselements im nicht in die Gehäusewand eingesetzten Zustand und
- Fig. 6: eine schematische perspektivische Ansicht des in Fig. 2 gezeigten Leitungsarretierungselements mit Blick auf dessen dem Federelement abgewandte Rückseite.

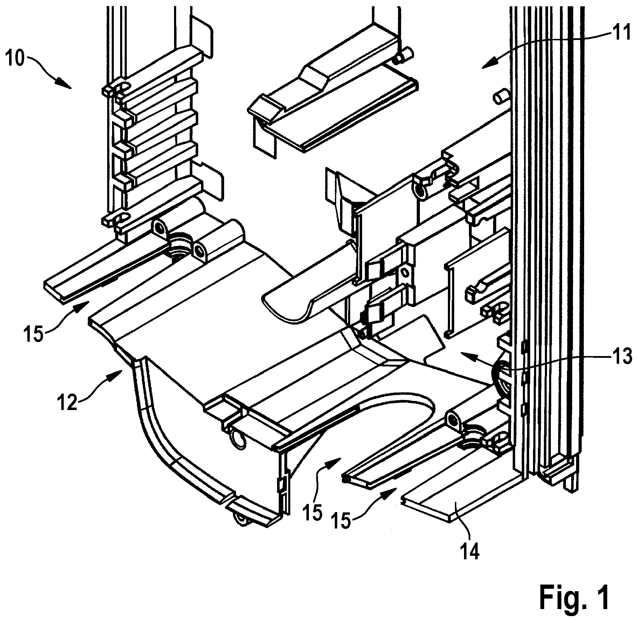

Fig. 1 zeigt eine schematische perspektivische Ansicht des Gehäuseunterteils 11 eines Gehäuses 10 des - in den Zeichnungen nicht vollständig gezeigten - erfindungsgemä-βen Durchlauferhitzers. Das Gehäuse 10 umfasst eine - in den Zeichnungen nicht gezeigte - Gehäusehaube und das Gehäuseunterteil 11. Die Gehäusehaube ist dabei ausgebildet und eingerichtet auf das Gehäuseunterteil 11 aufgesetzt bzw. an diesem lösbar fixiert zu werden. Das Gehäuseunterteil 11 wiederum weist eine zur Trennung eines Anschlussraumes 12 von einem Geräteinnenraum 13 eingerichtete Gehäusewand 14 auf.

In dem Anschlussraum 12 sind regelmäßig - in den Zeichnungen nicht gezeigte - aus einer Gebäudewand ragende elektrische Anschlüsse und Leitungen sowie hydraulische Leitungen angeordnet, die als hydraulische und/oder elektrische Anschlüsse ausgebildet sind. In dem Geräteinnenraum 13 ist vorzugsweise unter anderem eine - in den Zeichnungen nicht gezeigte - Kanalanordnung mit fluidgängigen Kanälen bzw. eine Heizkartusche angeordnet. Der Anschlussraum 12 kann vorzugsweise außerhalb des Gehäuseunterteils 11 liegen. Auch ist es möglich, dass der Anschlussraum 12 von Teilen des Gehäuseunterteils 11 eingefasst ist. In diesem Fall ist jedoch die Rückwand des Gehäuseunterteils 11 in diesem Bereich nicht geschlossen, um in der Montageposition des Durchlauferhitzers aus der Wand kommende Leitungen und Anschlüsse nicht zu verdecken. Von dem Anschlussraum 12 führen besonders bevorzugt die Leitungen durch eine Öffnung der Gehäusewand 14 in den Geräteinnenraum 13. Leitungen bezeichnen hier sowohl hydraulische Leitungen als auch elektrische Leitungen, beispielsweise Wasserleitungen und/oder Kabel.

Wie in den Fig. 1, 3 und 5 gezeigt, weist die Gehäusewand 14 mindestens eine zu der Gehäusehaube hin offene Wandausnehmung 15 auf, die zum Durchführen mindestens einer Leitung eingerichtet ist. Der Durchlauferhitzer weist vorzugsweise mindestens zwei Wandausnehmungen 15 auf. In der Fig. 1 sind beispielhaft drei der Wandausnehmungen 15 gezeigt.

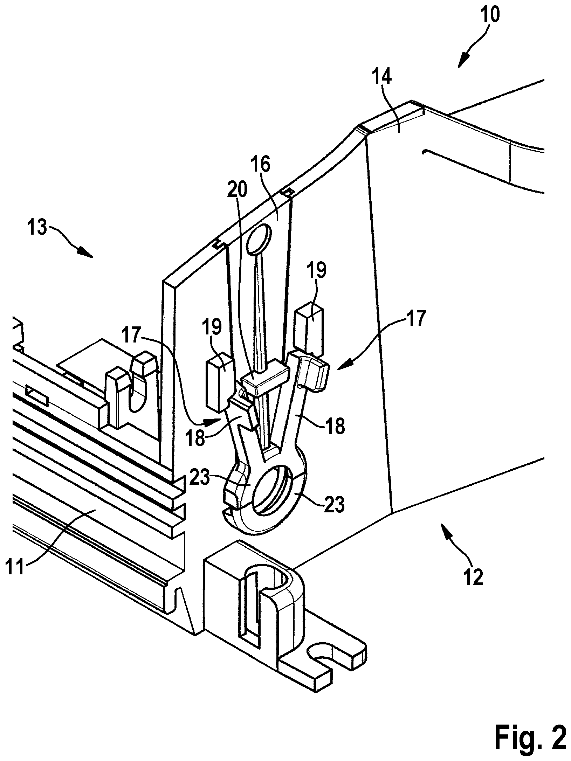

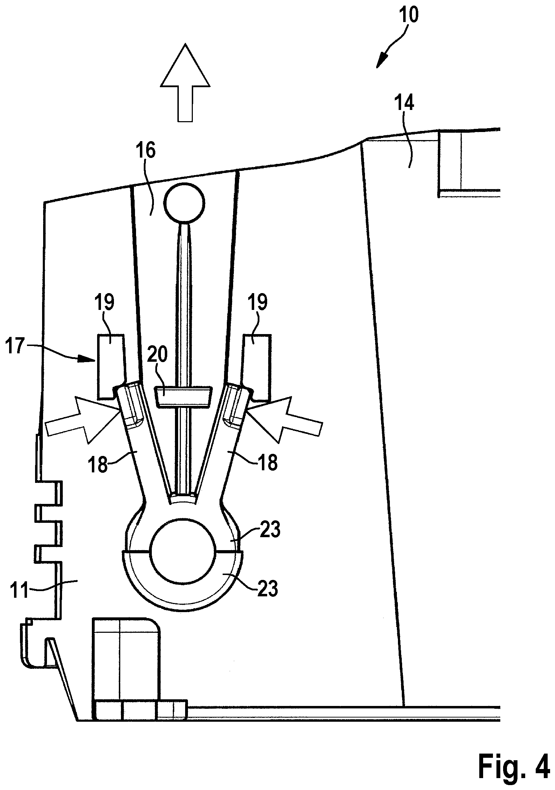

Ferner zeigen Fig. 2 und 4 jeweils schematische Ansichten eines Leitungsarretierungselements 16 in einer Arretierungsposition. Der erfindungsgemäße Durchlauferhitzer umfasst mindestens ein Leitungsarretierungselement 16, das zum lösbaren Anordnen in der Wandausnehmung 15 der Gehäusewand 14 unter Arretierung der mindestens einen Leitung ausgebildet ist. Das Leitungsarretierungselement 16 umfasst mindestens ein Verriegelungsmittel 17. In der Arretierungsposition verriegelt dazu das Leitungsarretierungselement 16 mittels des Verriegelungsmittels 17 an der Gehäusewand 14 selbsttätig, d. h. das Verriegelungsmittel 17 ist eingerichtet, beim Erreichen der Arretierungsposition ohne weiteres Zutun eigenständig zu verriegeln

Das Verriegelungsmittel 17 ist in den Fig. 2 und 4 gezeigt und weist mindestens ein betätigbar eingerichtetes Federelement 18 sowie mindestens eine Federelementaufnahme 19 zur Arretierung des Federelements 18 auf. Vorzugsweise ist das Federelement 18 an dem Leitungsarretierungselement 16 und die Federelementaufnahme 19 an der Gehäusewand 15 ausgebildet bzw. angeordnet. Die Federelementaufnahme 19 ist dabei besonders bevorzugt so ausgebildet und eingerichtet, dass das Federelement 18 passgenau in der Federelementaufnahmen 19 anordenbar ist bzw. in diese eingreift, wodurch das Leitungsarretierungselement 16 gegenüber Bewegungen in Richtung der Gehäusehaube verriegelt ist.

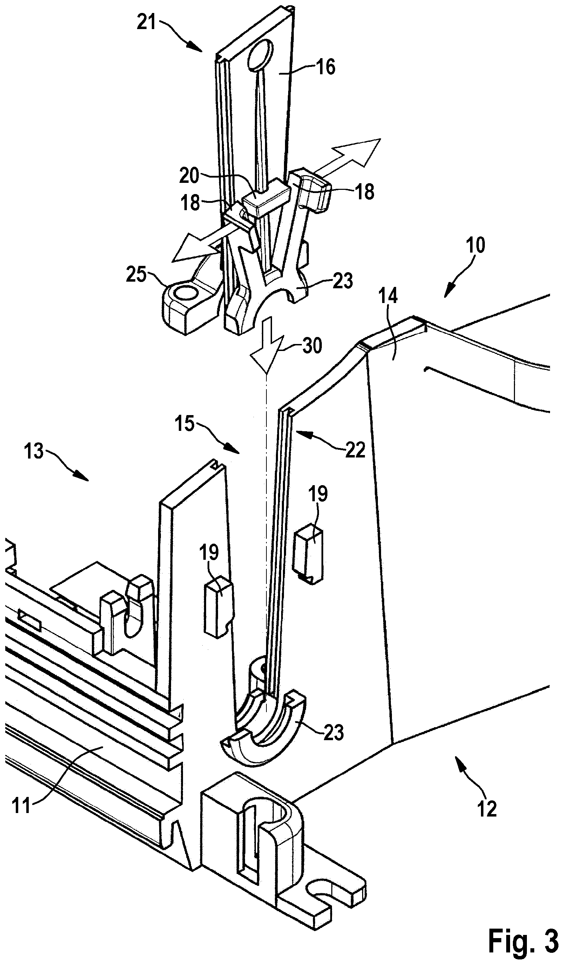

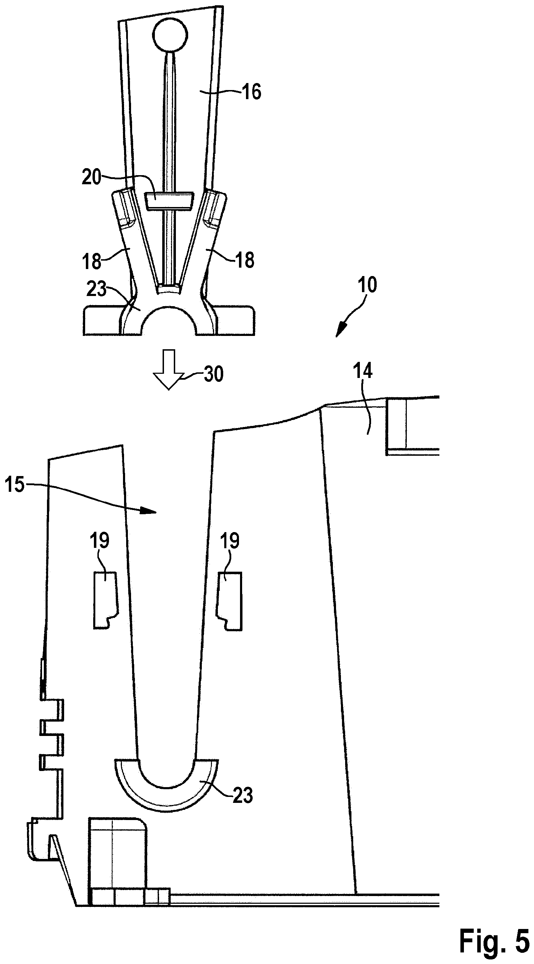

In den Fig. 3 und Fig. 5 ist das Leitungsarretierungselement 16 in einem nicht in die Gehäusewand 14 eingesetzten Zustand des Durchlauferhitzers gezeigt. Beim Einsetzen des Leitungsarretierungselements 16 in die Wandausnehmung 15 bzw. beim Arretieren der Leitung bilden das Federelement 18 und die Federelementaufnahme 19 eine formschlüssige Schnappverbindung aus. In den Fig. 3 und 5 ist hierzu beispielhaft mittels eines stilisierten Pfeils die Einsatzrichtung 30 des Leitungsarretierungselements 16 gezeigt. Ferner sind in den Fig. 3 und 4 mit den zwei Pfeilen senkrecht zu der Einsatzrichtung 30, die jeweils vom Federelement 18 weg- bzw. hinzeigend abgebildet sind, die Richtungen dargestellt, in die die gezeigten Federelemente 18 vorzugsweise betätigbar eingerichtet sind.

Der Vorgang des Verriegelns bzw. des Einsetzens des Leitungsarretierungselements 16 in die Wandausnehmung 15 ist in der Fig. 3 gezeigt. Genauer ist das Bewegen des Leitungsarretierungselements 16 in die Einsatzrichtung 30 angedeutet, wodurch ein selbsttätiges Verriegeln mittels des Verriegelungsmittels 17 erfolgt. Dabei schnappen die Federelemente 18, sofern sich das Leitungsarretierungselement 16 vollständig in der Wandausnehmung 15 befindet, in die Federelementaufnahmen 19 ein und werden vorzugsweise unterhalb der "Nase" der Federelementaufnahmen 19 verriegelt bzw. arretiert. Im eingesetzten Zustand ist das Leitungsarretierungselement 16 somit beispielsweise gegen Bewegungen entgegen der Einsatzrichtung 30 verriegelt. Beim Verriegeln, das heißt beim Einschnappen der Federelemente 18 in die "Nase" der Federelementaufnahmen, erfolgt vorzugsweise ein akustischer Hinweis, der das Abschließen des Verriegelungsvorgangs veranschaulicht.

Das Lösen des Leitungsarretierungselements 16 aus der Wandausnehmung 15 der Gehäusewand 14 ist in der Fig. 4 durch die an die Federelemente 18 angrenzenden skizzierten Pfeile beispielhaft gezeigt. Um ein Lösen des Leitungsarretierungselements 16 aus der Gehäusewand 14 zu ermöglichen, muss das Verriegelungsmittel 17 gelöst werden. Dazu werden die Federelemente 18 aus der Federelementaufnahme 19 gelöst, indem die Federelement 18 beispielsweise durch ein Betätigen in Richtung der angedeuteten Pfeile bewegt werden. Durch ein Betätigen der Federelemente 18 lösen sich diese von der "Nase" der Federelementaufnahmen 19, und durch ein Bewegen des Leitungsarretierungselements 16 entgegen der Einsatzrichtung 30 wird das Leitungsarretierungselement 16 aus der Wandausnehmung 15 entfernt.

Das Leitungsarretierungselements 16 umfasst vorzugsweise mindestens ein Begrenzungselement 20, wie es in den Fig. 2 bis 5 gezeigt ist, zum Begrenzen des Betätigungswegs der Federelemente 18. Wie in der Fig. 4 gezeigt, wird durch das Begrenzungselement 20 der maximale Betätigungsweg der Federelemente 18 beim Lösen des Leitungsarretierungselements 16 aus der Wandausnehmung 15 begrenzt. Die Federelemente 18 können maximal nur bis zu dem Begrenzungselement 20 betätigt werden und werden danach an einer weitergehenden Bewegung gehindert.

Vorteilhafterweise ist das Leitungsarretierungselement 16 in der Wandausnehmung 15 der Gehäusewand 14 mittels einer Feder-Nut-Anordnung in Richtung der Gehäusehaube bewegbar eingerichtet, wobei die Gehäusewand 14 bzw. das Leitungsarretierungselement 16 jeweils eine Nut- oder Federumrandung 21, 22 aufweist. In der in Fig. 3 gezeigten Ausführungsform des erfindungsgemäßen Durchlauferhitzers weist beispielsweise das Leitungsarretierungselement 16 eine Federumrandung 21 auf und die Wandausnehmung 15 weist eine Nutumrandung 22 auf. Vorteilhafterweise wird das Leitungsarretierungselement 16 während des Verriegelns bzw. während des Lösungsvorgangs in dieser Feder-Nut-Anordnung geführt und die Stabilität mit der Gehäusewand 14 dadurch verstärkt.

Ferner umfasst das Leitungsarretierungselement 16 und/oder die Wandausnehmung 15 ein Formteil 23 zur formschlüssigen Aufnahme der Leitung auf. Das Formteil 23 des Leitungsarretierungselements 16 und/oder der Wandausnehmung 15 ist im Querschnitt halbkreisförmig ausgebildet. Vorzugsweise weist sowohl das Leitungsarretierungselement 16 als auch die Wandausnehmung 15 jeweils ein Formteil 23 auf, wodurch eine Leitung vollständig mit den jeweils halbkreisförmigen Formteilen 23 umschlossen wird.

Das Formteil 23 ist weiter bevorzugt in Verlauf der Leitung breiter ausgestaltet als die Breite des Leitungsarretierungselements 16 bzw. die Breite der Gehäusewand 14 im Verlauf der Leitung. Die Leitung ist auf diese Weise besser in der Wandausnehmung 15 arretierbar.

Weiterhin weisen das Leitungsarretierungselement 16 und/oder die Wandausnehmung 15 vorteilhafterweise einen komprimierbaren Materialüberschuss 24 auf, insbesondere im Bereich des Formteils 23, der beim Arretieren der Leitung komprimiert wird. Auf diese Weise ist der Geräteinnenraum 13 beispielsweise gegenüber Spritz- und Strahlwasser geschützt.

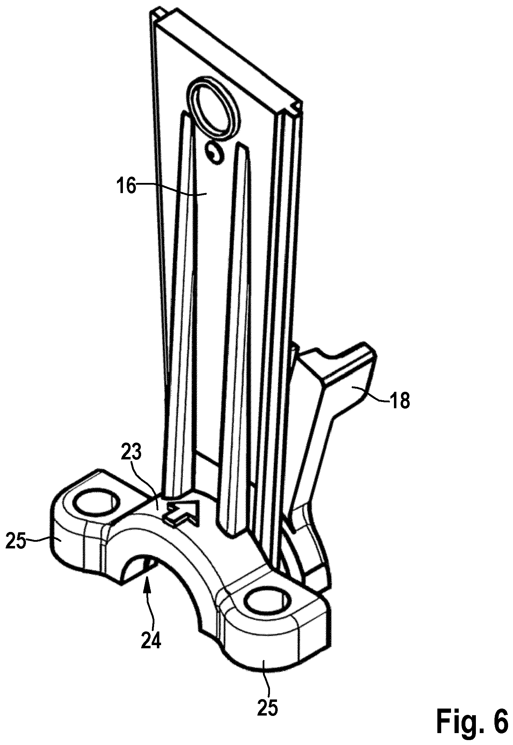

In Fig. 6 ist das Leitungsarretierungselement 16 in der Rückansicht gezeigt. Das Leitungsarretierungselement 16 weist vorzugsweise mindestens eine Verbindungselementaufnahme 25 zur Aufnahme mindestens eines - in den Zeichnungen nicht gezeigten - Verbindungselements auf. Das Verbindungselement kann beispielsweise durch die Verbindungselementaufnahme 25 in einer Öffnung auf der Gehäuseunterteilseite 11 fixiert werden. Vorzugsweise ist das Leitungsarretierungselement 16 allerdings frei von Verbindungselementen in der Wandausnehmung 15 der Gehäusewand 14 eingesetzt.

## Patentansprüche

1. Durchlauferhitzer mit einem Gehäuse (10), umfassend eine Gehäusehaube und ein Gehäuseunterteil (11),
wobei das Gehäuseunterteil (11) mindestens eine zur Trennung eines Anschlussraumes (12) von einem Geräteinnenraum (13) eingerichtete Gehäusewand (14) aufweist,
wobei die Gehäusewand (14) mindestens eine zu der Gehäusehaube hin offene Wandausnehmung (15) aufweist, die zum Durchführen mindestens einer Leitung eingerichtet ist,
weiter umfassend mindestens ein Leitungsarretierungselement (16), **dadurch gekennzeichnet, dass** das mindestens eine Leitungsarretierungselement (16) zum lösbaren Anordnen in der Wandausnehmung (15) unter Arretierung der mindestens einen Leitung ausgebildet ist,
und mindestens ein Verriegelungsmittel (17), das eingerichtet ist, das Leitungsarretierungselement (16) in einer Arretierungsposition an der Gehäusewand (14) selbsttätig zu verriegeln.

2. Durchlauferhitzer nach Anspruch 1, **dadurch gekennzeichnet, dass** das mindestens eine Verriegelungsmittel (17) mindestens ein betätigbares Federelement (18) sowie mindestens eine Federelementaufnahme (19) zur Arretierung des Federelements (18) aufweist.

3. Durchlauferhitzer nach Anspruch 1 oder 2, **dadurch gekennzeichnet, dass** das Federelement (18) an dem Leitungsarretierungselement (16) ausgebildet ist und dass die Federelementaufnahme (19) an der Gehäusewand (14) ausgebildet ist.

4. Durchlauferhitzer nach einem der Ansprüche 1 bis 3, **dadurch gekennzeichnet, dass** das Federelement (18) und die Federelementaufnahme (19) als eine formschlüssige Schnappverbindung ausgebildet und eingerichtet sind.

5. Durchlauferhitzer nach einem der Ansprüche 1 bis 4, **dadurch gekennzeichnet, dass** das Leitungsarretierungselement (16) mindestens ein Begrenzungselement (20) zum Begrenzen des Betätigungsweges des Federelements (18) umfasst.

6. Durchlauferhitzer nach einem der Ansprüche 1 bis 5, **dadurch gekennzeichnet, dass** das Leitungsarretierungselement (16) in der Wandausnehmung (15) der Gehäusewand (14) mittels einer Feder-Nut-Anordnung in Richtung der Gehäusehaube bewegbar eingerichtet ist, wobei die Gehäusewand (14) bzw. das Leitungsarretierungselement (16) jeweils eine Nut- oder Federumrandung (22, 21) aufweist.

7. Durchlauferhitzer nach einem der Ansprüche 1 bis 6, **dadurch gekennzeichnet, dass** das Leitungsarretierungselement (16) und/oder die Wandausnehmung (15) ein Formteil (23) zur formschlüssigen Aufnahme der Leitung umfasst.

8. Durchlauferhitzer nach Anspruch 7, **dadurch gekennzeichnet, dass** das Formteil (23) des Leitungsarretierungselements (16) und/oder der Wandausnehmung (15) im Querschnitt halbkreisförmig ausgebildet ist.

9. Durchlauferhitzer nach einem der Ansprüche 1 bis 8, **dadurch gekennzeichnet, dass** das Leitungsarretierungselement (16) und/oder die Wandausnehmung (15) einen komprimierbaren Materialüberschuss (24) aufweist, insbesondere im Bereich des Formteils (23), der beim Arretieren der Leitung komprimiert wird.

10. Durchlauferhitzer nach einem der Ansprüche 1 bis 9, **dadurch gekennzeichnet, dass** die Federelemente (18) am Formteil (23) des Leitungsarretierungselements (16) ausgebildet und eingerichtet sind.

11. Durchlauferhitzer nach einem der Ansprüche 1 bis 10, **dadurch gekennzeichnet, dass** das Leitungsarretierungselements (16) ausgebildet ist, dass beim selbsttätigen Verriegeln in der Wandausnehmung (15) ein akustischer Hinweis erfolgt.

12. Durchlauferhitzer nach einem der Ansprüche 1 bis 11, **dadurch gekennzeichnet, dass** das Leitungsarretierungselement (16) mindestens eine Verbindungselementaufnahme (25) zur Aufnahme mindestens eines Verbindungselements aufweist.

## Claims

1. Continuous-flow heater with a housing (10) comprising a housing cover and a housing bottom part (11),
the housing bottom part (11) having at least one housing wall (14) adapted to separate a connection space (12) from a device interior (13),
the housing wall (14) having at least one wall recess (15) which is open towards the housing cover and is adapted for guiding through at least one line,
further comprising at least one line locking element (16), **characterised in that** the at least one line locking element (16) is configured so as to be detachably disposed in the wall recess (15) while locking the at least one line,
and at least one locking means (17) adapted to automatically lock the line locking element (16) in a locking position on the housing wall (14).

2. Continuous-flow heater according to claim 1, **characterised in that** the at least one locking means (17) has at least one operable spring element (18) and at least one spring element receptacle (19) for locking the spring element (18).

3. Continuous-flow heater according to claim 1 or 2, **characterised in that** the spring element (18) is configured on the line locking element (16) and the spring element receptacle (19) is configured on the housing wall (14).

4. Continuous-flow heater according to any one of claims 1 to 3, **characterised in that** the spring element (18) and the spring element receptacle (19) are configured and adapted as a positive-locking snap connection.

5. Continuous-flow heater according to any one of claims 1 to 4, **characterised in that** the line locking element (16) comprises at least one limiting element (20) for limiting the actuating path of the spring element (18).

6. Continuous-flow heater according to any one of claims 1 to 5, **characterised in that** the line locking element (16) is disposed in the wall recess (15) of the housing wall (14) so as to be movable towards the housing cover by means of a tongue-and-groove arrangement, the housing wall (14) and the line locking element (16) having groove and tongue edges respectively (22, 21).

7. Continuous-flow heater according to any one of claims 1 to 6, **characterised in that** the line locking element (16) and/or the wall recess (15) comprise a moulded part (23) for the positive-locking attachment of the line.

8. Continuous-flow heater according to claim 7, **characterised in that** the moulded part (23) of the line locking element (16) and/or of the wall recess (15) is semicircular in cross-section.

9. Continuous-flow heater according to any one of claims 1 to 8, **characterised in that** the line locking element (16) and/or the wall recess (15) has compressible excess material (24), in particular in the area of the moulded part (23), which is compressed when locking the line.

10. Continuous-flow heater according to any one of claims 1 to 9, **characterised in that** the spring elements (18) are configured and disposed on the moulded part (23) of the line locking element (16).

11. Continuous-flow heater according to any one of claims 1 to 10, **characterised in that** the line locking element (16) is configured such that an acoustic signal is emitted when it is automatically locked in the wall recess (15).

12. Continuous-flow heater according to any one of claims 1 to 11, **characterised in that** the line locking element (16) has at least one connecting element receptacle (25) to accommodate at least one connecting element.

## Revendications

1. Chauffe-eau instantané avec un boîtier (10), comprenant un capot de boîtier et une partie inférieure de boîtier (11),
la partie inférieure de boîtier (11) présentant au moins une paroi de boîtier (14) adaptée pour séparer un espace de raccordement (12) d'un espace intérieur d'appareil (13),
la paroi de boîtier (14) présentant au moins un évidement de paroi (15) ouvert vers le capot de boîtier, qui est adapté pour le passage d'au moins une conduite,
comprenant en outre au moins un élément de blocage de conduite (16), **caractérisé en ce que** l'au moins un élément de blocage de conduite (16) est configuré pour être agencé de manière amovible dans l'évidement de paroi (15) en bloquant l'au moins une conduite,
et au moins un moyen de verrouillage (17) qui est adapté pour verrouiller automatiquement l'élément de blocage de conduite (16) dans une position de blocage sur la paroi de boîtier (14).

2. Chauffe-eau instantané selon la revendication 1, **caractérisé en ce que** l'au moins un moyen de verrouillage (17) présente au moins un élément de ressort (18) actionnable ainsi qu'au moins un logement d'élément de ressort (19) pour bloquer l'élément de ressort (18).

3. Chauffe-eau instantané selon la revendication 1 ou 2, **caractérisé en ce que** l'élément de ressort (18) est configuré sur l'élément de blocage de conduite (16) et **en ce que** le logement d'élément de ressort (19) est configuré sur la paroi de boîtier (14).

4. Chauffe-eau instantané selon l'une quelconque des revendications 1 à 3, **caractérisé en ce que** l'élément de ressort (18) et le logement d'élément de ressort (19) sont configurés et adaptés sous la forme d'un assemblage par enclenchement à complémentarité de forme.

5. Chauffe-eau instantané selon l'une quelconque des revendications 1 à 4, **caractérisé en ce que** l'élément de blocage de conduite (16) comprend au moins un élément de limitation (20) pour limiter la course d'actionnement de l'élément de ressort (18).

6. Chauffe-eau instantané selon l'une quelconque des revendications 1 à 5, **caractérisé en ce que** l'élément de blocage de conduite (16) est adapté pour pouvoir se déplacer dans l'évidement de paroi (15) de la paroi de boîtier (14) en direction du capot de boîtier au moyen d'un agencement à rainure et languette, la paroi de boîtier (14) ou l'élément de blocage de conduite (16) présentant respectivement un bord à rainure ou languette (22, 21).

7. Chauffe-eau instantané selon l'une quelconque des revendications 1 à 6, **caractérisé en ce que** l'élément de blocage de conduite (16) et/ou l'évidement de paroi (15) comprend une pièce moulée (23) pour recevoir la conduite par complémentarité de forme.

8. Chauffe-eau instantané selon la revendication 7, **caractérisé en ce que** la pièce moulée (23) de l'élément de blocage de conduite (16) et/ou de l'évidement de paroi (15) est configurée sous forme semi-circulaire en section transversale.

9. Chauffe-eau instantané selon l'une quelconque des revendications 1 à 8, **caractérisé en ce que** l'élément de blocage de conduite (16) et/ou l'évidement de paroi (15) présente un excédent de matériau compressible (24), en particulier dans la zone de la pièce moulée (23), qui est compressé lors du blocage de la conduite.

10. Chauffe-eau instantané selon l'une quelconque des revendications 1 à 9, **caractérisé en ce que** les éléments à ressort (18) sont configurés et adaptés sur la pièce moulée (23) de l'élément de blocage de conduite (16).

11. Chauffe-eau instantané selon l'une quelconque des revendications 1 à 10, **caractérisé en ce que** l'élément de blocage de conduite (16) est configuré de telle sorte qu'une indication acoustique est effectuée lors du verrouillage automatique dans l'évidement de paroi (15).

12. Chauffe-eau instantané selon l'une quelconque des revendications 1 à 11, **caractérisé en ce que** l'élément de blocage de conduite (16) présente au moins un logement d'élément de liaison (25) pour recevoir au moins un élément de liaison.
